# FASCICULE DE BREVET EUROPEEN

(11) **EP 2 359 546 B1**
(45) Date de publication et mention de la délivrance du brevet: **07.03.2018**
(21) Numéro de dépôt: 09760189.2
(22) Date de dépôt: 22.10.2009
(51) Int. Cl.: H04L 12/70

(54) **PROCEDE DE CONFIGURATION DE PARAMETRES DE GESTION DE PAQUETS DE DONNEES APPARTENANT A UN FLUX DE DONNEES**
VERFAHREN ZUM KONFIGURIEREN VON PARAMETERN ZUR VERWALTUNG VON EINEN DATENFLUSS BETREFFENDEN DATENPAKETEN
METHOD FOR CONFIGURING PARAMETERS FOR MANAGING DATA PACKETS PERTAINING TO A DATA FLOW

(30) Priorité: 23.10.2008 FR 0857195; 30.04.2009 FR 0952915
(43) Date de publication de la demande: 24.08.2011
(73) Titulaire: Orange, 75015 Paris (FR)
(72) Inventeur: CADIOU, Jean-François, F-22560 Trebeurden (FR); BONNAMY, Jean-Michel, F-22560 Pleumeur Bodou (FR); HAMCHAOUI, Isabelle, F-22730 Tregastel (FR); CHAPLAIN, René, F-22300 Lannion (FR)
(86) Numéro de dépôt international: PCT/FR2009/052018
(87) Numéro de publication internationale: WO 2010/046598

(56) Documents cités:
- US-A1- 2008 144 502
- JAMES POLK CISCO SYSTEMS: "Configuring the Differentiated Services Codepoint of Session Description Protocol Established Media Streams; draft-polk-mmusic-dscp-attribute-01.txt" IETF STANDARD-WORKING-DRAFT, INTERNET ENGINEERING TASK FORCE, IETF, CH, no. 1, 5 mars 2007 (2007-03-05), XP015050313 ISSN: 0000-0004
- ATARASHI COMMUNICATIONS RESEARCH LABORATORY F BAKER CISCO SYSTEMS R: "Reflexive DSCP Policy; draft-atarashi-dscp-policy-00.txt" IETF STANDARD-WORKING-DRAFT, INTERNET ENGINEERING TASK FORCE, IETF, CH, 1 octobre 2001 (2001-10-01), XP015010404 ISSN: 0000-0004

## Description

L'invention concerne une technique de gestion des messages de données appartenant à un flux de données transmis entre deux réseaux de communications distincts.

Avec le développement des télécommunications, un nombre croissant d'équipements terminaux sont amenés à échanger entre eux des flux de message de données. Souvent, ces terminaux appartiennent à des réseaux de communication distincts. Dans chacun de ces réseaux de communication, le gestionnaire des ressources du réseau, par exemple un opérateur en télécommunications, définit des paramètres de gestion à appliquer aux différents flux de message de données transmis au travers du réseau. Chacun de ces flux de message de données correspond à un service tel que par exemple Internet, de la voix sur IP ou VoIP, ou des services audiovisuels tels que la télévision sur IP. Ces paramètres de gestion sont par exemple la classe de service ou DSCP (*Differentiated Services Code Point,* ou codes d'accès aux services différenciés en français) et la priorité à donner aux messages de données en fonction de la classe de service. Les paramètres de gestion sont compris dans des champs d'entête des messages de données.

Le gestionnaire des ressources de chacun des réseaux traversés s'assure que les flux de données bénéficient des ressources nécessaires à la fourniture du service correspondant. Ainsi, pour un même flux de données, et donc un même service, selon que les messages de données sont transmis depuis un premier réseau vers un deuxième réseau ou inversement, ceux-ci se voient appliquer des paramètres de gestion différents puisque les gestionnaires sont différents.

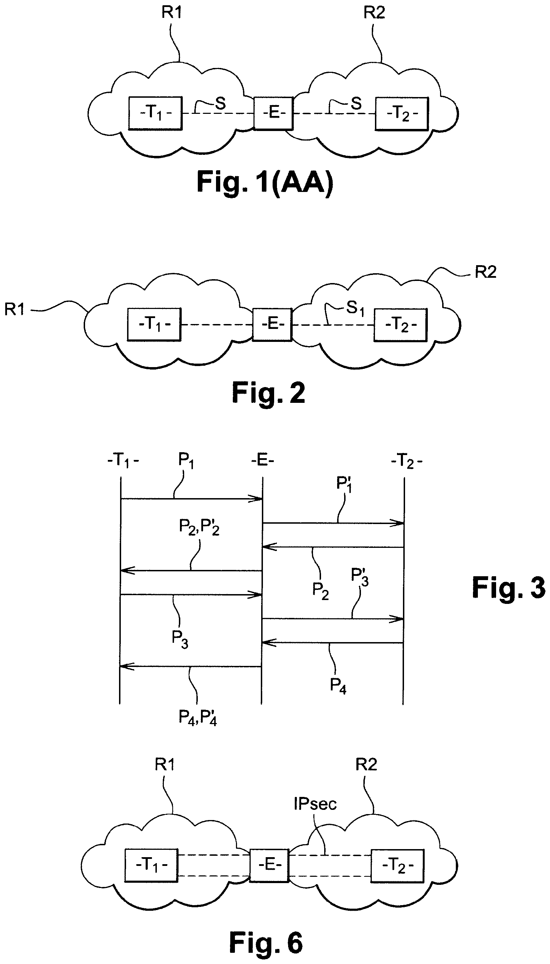

En référence à la figure 1, un flux de données S, représenté par un trait en pointillés sur la figure, est transmis entre un premier terminal T₁ et un équipement T₂. Le terminal T₁ appartient à un premier réseau R1 de communications, par exemple un réseau local domestique ou d'entreprise, et l'équipement T₂ appartient à un réseau R2 de communications de type WAN (*Wide Area Network,* ou réseau étendu en français) géré par un opérateur en télécommunications. Un équipement E réalise une interface entre le réseau local R1 et le réseau R2.

Dans le cas où le premier réseau R1 est un réseau local domestique, l'équipement E est une passerelle résidentielle. Un tel équipement gère alors les ressources au sein du réseau local R1 ainsi que les ressources à attribuer aux flux de données émis depuis le réseau R1 vers le réseau R2. En fonction de la classe de service, l'équipement E applique une priorité aux messages de données transmis depuis le réseau local R1 vers le réseau R2 en cas de congestion afin de mettre en place des politiques de traitement des flux de données différentes et ainsi assurer une qualité de service satisfaisante. Les paramètres de gestion sont introduits en entête des messages de données par le terminal T₁ lui-même. Cependant, le terminal T₁ n'étant pas nécessairement contrôlé par l'opérateur gestionnaire du réseau R2, les valeurs des paramètres de gestion compris dans les entêtes des messages de données émis par le terminal T₁ ne sont pas fiables pour le réseau R2. En effet, il est possible qu'un terminal appartenant au réseau local R1 introduise dans les entêtes des messages de données des valeurs de paramètres de gestion erronées ou malveillantes. Un tel marquage erroné ou malveillant des messages de données engendre un mauvais traitement de ces messages de données avec pour conséquences, l'apparition de congestion dans les différents réseaux et une dégradation de la qualité de service pour l'ensemble des usagers.

Afin de résoudre cet inconvénient, une première solution consiste à utiliser l'adresse IP (*Internet Protocol,* ou protocole internet en français) de l'équipement T₂ qui est une valeur fiable car attribuée par l'opérateur en télécommunications gestionnaire du réseau R2, afin d'avoir accès à la classe de service à attribuer aux messages de données émis par le terminal T₁. Cependant, lorsque cette adresse IP est modifiée lors de modifications de l'architecture ou du plan d'adressage du réseau, les informations relatives à la classe de service sont perdues. De plus, un même terminal T₁ peut vouloir utiliser successivement plusieurs services différents et donc plusieurs classes de service différentes. La détermination de la classe de service par l'adresse du terminal T₁ n'est donc pas toujours une solution satisfaisante.

Le document US2008/144502 A1 enseigne une méthode pour décongestionner les liens radioélectriques entre des téléphones cellulaires et une station de base. Cette méthode utilise le champ DSCP de l'entête des paquets IP échangés dans les deux sens entre le réseau et les téléphones, pour véhiculer vers un des téléphones une instruction de ne pas émettre de paquets, mais elle présente des inconvénients.

Il existe donc un besoin d'une technique permettant de déterminer, pour chaque message de données émis depuis un réseau de communication non fiable, c'est-à-dire un réseau non géré par un opérateur en télécommunications, tel qu'un réseau local d'entreprise ou un réseau domestique, vers un second réseau, des paramètres de gestion de QoS à appliquer à ces messages de données, qui ne présente pas de tels inconvénients.

L'invention répond à ce besoin en proposant un procédé de configuration de paramètres de gestion selon la revendication 1, un procédé de traitement de paquets de données selon la revendication 5, un dispositif de configuration de paramètres de gestion selon la revendication 7, un dispositif de traitement de paquets de données selon la revendication 8, un programme d'ordinateur selon la revendication 10 et un support d'enregistrement selon la revendication 11. Des modes de réalisations sont définis dans les revendications dépendantes. Une telle solution permet d'assurer l'établissement d'une relation de confiance entre les différents terminaux entre lesquels le flux de données est établi tout en étant transparente aux différentes modifications pouvant intervenir dans l'un des deux réseaux.

Dans l'ensemble de ce document, par message de données, on entend un ensemble d'au moins un paquet de données appartenant au flux de données.

En utilisant un unique paramètre de gestion et en l'appliquant à tous les paquets de données d'un message appartenant au flux de données, il est possible de prendre en compte les modifications intervenant dans le ou les réseaux sans interrompre le service et sans avoir à modifier un équipement disposé à la frontière des deux réseaux. En effet, lorsqu'un nouveau terminal appartenant, par exemple, au premier réseau échange un flux de données avec un terminal appartenant au second réseau, il n'est pas nécessaire de modifier l'équipement disposé à la frontière des deux réseaux ou d'interrompre le service pour établir une relation de confiance entre les deux terminaux. Il suffit de déterminer le paramètre de gestion à utiliser pour ce flux de données et de l'appliquer à tous les paquets de données appartenant à ce flux de données.

Si le premier réseau est un réseau local domestique et que le deuxième réseau est un réseau de type WAN géré de préférence par un opérateur en télécommunications, le paramètre de gestion à appliquer prend la valeur du deuxième paramètre de gestion issu du réseau WAN. En effet, le WAN étant géré par l'opérateur en télécommunications, la valeur du paramètre de gestion issu de ce réseau est fiable. Ainsi, les paquets de données transmis depuis le premier réseau vers le deuxième réseau héritent du paramètre de gestion des paquets de données transmis depuis le deuxième réseau vers le premier réseau.

Selon une caractéristique du procédé de configuration objet de l'invention, le premier et le deuxième paramètre de gestion sont compris dans un champ d'entête des messages de données appartenant au flux de données.

Un tel champ correspond par exemple au champ DSCP tel que défini dans un document de l'IETF (groupe de standardisation de l'Internet, abréviation des termes anglais *Internet Engineering Task Force),* référencé RFC 2474 (RFC signifiant "requête pour commentaires, ou en anglais *Request For Comments*)*.* Un tel champ comporte des informations relatives à la nature du flux auquel appartient un message de données, et à la manière dont un tel flux doit être traité par les différents équipements traversés par le flux de données. Il n'est, par conséquent, pas nécessaire de modifier les entêtes des paquets de données appartenant au message transmis.

Selon une caractéristique du procédé de configuration objet de l'invention, préalablement à l'étape de sélection du paramètre de gestion à appliquer, un paramètre de gestion prédéterminé est appliqué aux messages de données appartenant au flux de données.

En appliquant un paramètre de gestion par défaut aux paquets de données appartenant au message tant que le paramètre de gestion à appliquer n'a pas été déterminé, on limite le risque de voir apparaître des congestions dans le réseau liées à un traitement non approprié de paquets de données. On garantit ainsi à chaque usager un accès aux ressources du réseau.

Selon une caractéristique du procédé de configuration objet de l'invention, l'étape de mémorisation comprend en outre la mémorisation de la valeur d'un paramètre, dit paramètre ECN, compris dans l'entête du deuxième paquet, cette valeur étant destinée à différencier différents flux partageant des mêmes informations d'identification de flux.

En comparant la valeur du paramètre ECN (*Explicit Congestion Notification*) comprise dans un champ d'entête des paquets de données appartenant au message avec une valeur dudit paramètre préalablement associé au flux de données on peut déterminer si la valeur du paramètre de gestion comprise dans le champ d'entête des paquets de données est une valeur de mise à jour. Le paramètre ECN est défini dans le document de l'IETF référencé RFC 3168.

Ce paramètre trouve une application particulièrement avantageuse lorsque le flux de données est transmis au travers d'un tunnel sécurisé tel qu'un tunnel IPsec. En effet, dans un tel cas de figure, le tunnel sécurisé est perçu par l'équipement disposé à la frontière entre les deux réseaux comme un flux de données. Le paramètre ECN permet alors de distinguer plusieurs flux de données distincts transmis au travers du tunnel sécurisé, assurant ainsi que le paramètre de gestion adéquat est associé à chaque flux de données.

L'invention peut être appliqué à un équipement réalisant une interface entre un premier et un deuxième réseau de télécommunication, comprenant un dispositif de configuration et un dispositif de configuration tels que ceux qui viennent d'être décrits.

Un tel équipement peut consister en une passerelle résidentielle ou d'entreprise, un multiplexeur de lignes numériques d'abonnés ou DSLAM, en un routeur, en une terminaison optique de ligne ou OLT, ou encore un noeud d'accès m ultiservice.

D'autres caractéristiques et avantages apparaîtront à la lecture de modes de réalisation décrits en référence aux dessins dans lesquels :
- la figure 1 représente un flux de données échangé entre deux terminaux appartenant à deux réseaux de communication distincts conformément à l'état de l'art,
- la figure 2 représente un flux de données échangé entre un terminal appartenant à un premier réseau de communication et un équipement appartenant à un deuxième réseau de communication, conformément à la présente invention,
- la figure 3 représente un diagramme temporel d'échanges de paquets de données entre un terminal appartenant au premier réseau de communication et l'équipement appartenant au deuxième réseau de communication lors de la mise en oeuvre du procédé de configuration objet de l'invention,
- la figure 4 représente les étapes du procédé de configuration objet de l'invention dans un premier mode de réalisation de l'invention,
- la figure 5 représente un dispositif apte à mettre en oeuvre le procédé de configuration objet de l'invention,
- la figure 6 représente un tunnel crypté établi entre un terminal appartenant à un premier réseau de communication et un équipement appartenant à un deuxième réseau de communication, conformément à la présente invention,
- la figure 7 représente les étapes du procédé de configuration objet de l'invention dans un deuxième mode de réalisation de l'invention.

En référence à la figure 2, un premier terminal T₁ appartient à un premier réseau de communication R1. Un équipement E est placé en extrémité du réseau R1 et assure l'interface entre le réseau R1 et un deuxième réseau de communication R2. Un tel réseau de communication R2 comporte par exemple un équipement réseau T₂.

Le réseau R1 est par exemple un réseau local domestique ou un réseau local d'entreprise. Le terminal T₁ peut alors être un ordinateur de type PC, un décodeur vidéo de type Set Top Box, un téléphone IP, etc. Le réseau R2 est par exemple un réseau de type WAN géré par un opérateur en télécommunications. L'équipement T₂ peut alors être un serveur fournissant des services tels qu'une connexion Internet, de la télévision sur IP, de la vidéo sur IP, etc.

Dans un tel mode de réalisation, l'équipement E d'interface est alors une passerelle domestique ou d'entreprise.

Lorsqu'un usager souhaite bénéficier d'un service sur le terminal T₁, ce dernier doit établir un flux de données avec l'équipement T₂ du réseau R2 fournissant le service demandé.

Le terminal T₁ et l'équipement T2 échangent alors entre eux des messages appartenant au flux de données. De tels messages comprennent un ou plusieurs paquets de données appartenant au flux. Dans la suite de la description, par souci de simplification, on décrit un exemple de mise en oeuvre de l'invention au niveau des paquets de données constitutifs des messages. Le lecteur étendra aisément cet enseignement aux messages de données, qui comprennent chacun un ou plusieurs paquets de données.

Un flux de données S1, représenté par des tirets sur la figure 1, est échangé entre le terminal T₁ du réseau R1 et l'équipement T₂ du réseau R2 au travers de l'équipement intermédiaire E. Un tel flux de données est identifié par exemple au moyen de l'adresse IP du terminal T₁, un port UDP appartenant à l'équipement T₂, dit port UDP source, et un port UDP appartenant au terminal T₁, dit port UDP destination, UDP signifiant *User Datagram Protocol* ou en français protocole de datagramme utilisateur. Dans un mode de réalisation particulier de l'invention, le flux de données est identifié par exemple IP du terminal T₁, un port TCP appartenant à l'équipement T₂, dit port TCP source, et un port TCP appartenant au terminal T₁, dit port TCP destination, TCP signifiant *Transmission Control Protocol* ou en français protocole de contrôle de transmission.

Les paquets de données appartenant au flux de données S1 comprennent également des paramètres de gestion tels que par exemple la classe de service DSCP et la priorité à donner aux paquets de données en fonction de la classe de service lorsqu'ils sont traités par les différents équipements réseau au travers desquels le flux de données S1 est transmis ainsi qu'un paramètre ECN (*Explicit Congestion Notification*)*,* tel que défini dans le document de l'IETF référencé RFC 3168. La classe de service DSCP est définie dans le document RFC 2474.

Ces différentes informations (paramètre de gestion, classe de service, paramètre ECN, etc.) sont communes à l'ensemble des paquets de données d'un même message. Ainsi, le paramètre de gestion compris en entête d'un paquet de données est également le paramètre de gestion du message comprenant le paquet de données. Il en est de même pour les autres paramètres compris en entête d'un paquet de données. Ainsi, le paramètre ECN compris en entête du paquet de données est également le paramètre ECN du message comprenant le paquet de données.

Dans ce premier mode de réalisation de l'invention, le paramètre ECN n'est pas utilisé. La valeur du paramètre ECN reste inchangée lors de la mise en oeuvre du procédé de configuration. La valeur du paramètre ECN est par exemple zéro.

Les paramètres de gestion de paquets de données sont propres à chaque type de service proposé ou demandé, et donc à chaque flux de données, et sont déterminés le plus souvent par le gestionnaire du réseau de communication. Ainsi, dans chacun des réseaux de communication R1, R2, le gestionnaire des ressources du réseau, par exemple un opérateur en télécommunications pour le réseau R2, définit des paramètres de gestion à appliquer aux différents flux de paquets de données transmis au travers de ce réseau. Les paramètres de gestion et le paramètre ECN sont compris respectivement dans les champs DSCP et ECN des champs d'entête des paquets de données.

Le réseau R1 étant un réseau local domestique, les différents terminaux fournissent des paramètres de gestion à appliquer aux paquets de données (donc aux messages de données) transitant dans le réseau à l'équipement d'interface E. L'équipement E s'assure que les flux de données bénéficient des ressources nécessaires à la fourniture du service correspondant.

De même, les paramètres de gestion à appliquer aux paquets de données (donc aux messages de données) transitant dans le réseau R2 sont déterminés par l'opérateur en télécommunications gestionnaire du réseau R2. Celui-ci s'assure que les flux de données bénéficient des ressources nécessaires à la fourniture du service correspondant.

Ainsi, pour un même flux de données, tel que le flux de données S1, et donc un même service, selon que les paquets de données sont transmis depuis le premier réseau R1 vers le deuxième réseau R2 ou inversement, ceux-ci se voient appliquer des paramètres de gestion différents puisque les gestionnaires des réseaux R1 et R2 sont différents.

Les paramètres de gestion fournis par les terminaux du réseau R1 n'étant pas définis par l'opérateur en télécommunication gestionnaire du réseau R2, sont considérés comme non fiables. Il est alors nécessaire d'appliquer aux paquets de données issus du réseau R1 et à destination du réseau R2 un paramètre de gestion fiable.

La figure 3 représente les différents échanges de paquets de données intervenant entre le premier terminal T₁, l'équipement d'interface E et l'équipement T₂ lors de la mise en oeuvre du procédé de configuration objet de l'invention.

Lorsqu'un usager souhaite bénéficier d'un service sur le terminal T₁, ce dernier doit établir un flux de données S1 avec l'équipement T₂ du réseau R2 fournissant le service demandé.

Le terminal T₁ émet à destination de l'équipement d'interface E un premier paquet de données P₁ appartenant au flux de données S1. Un tel paquet de données P₁ comprend un paramètre de gestion Param1 et un paramètre ECN, dont la valeur est par exemple zéro, à appliquer à tous les paquets de données émis par le terminal T₁ à destination de l'équipement T₂ et appartenant au flux de données S1.

A réception de ce paquet de données P₁ l'équipement d'interface E peut, dans un mode de réalisation particulier de l'invention, remplacer la valeur du paramètre de gestion Param1 compris en entête du paquet de données émis par le terminal T₁ par un paramètre de gestion prédéterminé ParamBE.

L'équipement d'interface E émet alors un deuxième paquet de données P₁' appartenant au flux de données S1 dans lequel le paramètre de gestion est ParamBE et non plus Param1. En remplaçant le paramètre de gestion compris dans le paquet de données P₁ par le paramètre de gestion ParamBE, on s'assure que les paquets de données émis par le terminal T₁ se voient appliquer par les équipements appartenant au réseau R2 une politique de traitement assurant une qualité de service satisfaisante.

A réception de ce paquet de données P₁', l'équipement T₂ émet à destination du terminal T₁, un troisième paquet de données P₂ appartenant au flux de données S1. Un tel paquet de données P₂ comprend un paramètre de gestion Param2 et un paramètre ECN, dont la valeur est également à zéro, à appliquer à tous les paquets de données de données émis par le terminal T₁ à destination de l'équipement T₂ et appartenant au flux de données S1.

Le paquet de données P₂ est intercepté par l'équipement d'interface E qui extrait la valeur du paramètre de gestion Param2 et du paramètre ECN afin de la mémoriser avec d'autres informations comprises dans le paquet de données d'établissement P₂, telles que des identifiants du terminal T₁ et de l'équipement T₂, ou encore du flux de données S1 telles que l'adresse IP du terminal T₁, un port UDP source, et un port UDP destination.

A réception de ce paquet de données P₂ l'équipement d'interface E peut, dans un mode de réalisation particulier de l'invention, remplacer la valeur du paramètre de gestion Param2 compris en entête des paquets de données émis par l'équipement T₂ par le paramètre de gestion Param1 utilisé dans le réseau R1. L'équipement d'interface E émet alors un deuxième paquet de données P₂' appartenant au flux de données S1 dans lequel le paramètre de gestion est Param1 et non plus Param2. La valeur du paramètre ECN reste inchangée et vaut toujours zéro. Dans un mode de réalisation particulier de l'invention, l'équipement d'interface E peut remplacer la valeur du paramètre ECN par une valeur par défaut.

Dans un autre mode de réalisation particulier de l'invention, la valeur du paramètre de gestion Param2 compris en entête des paquets de données de données émis par l'équipement T₂ peut être remplacée par une nouvelle valeur Param3 du paramètre de gestion. Une telle valeur Param3 du paramètre de gestion est mémorisée dans la table T de l'équipement d'interface E. Dans ce mode de réalisation la valeur du paramètre ECN reste inchangée.

Le paquet de données P₂, P₂' est ensuite transmis au terminal T₁.

Une fois l'équipement d'interface E configuré, des paquets de données P₃ appartenant au flux de données S1 et émis par le terminal T₁ sont interceptés par l'équipement d'interface E.

L'équipement d'interface E identifie le flux de données auquel appartiennent les paquets de données P₃ au moyen des informations d'identification du terminal T₁ et de l'équipement T₂, ou encore d'informations d'identification du flux de données S1 qu'il a mémorisées telles que l'adresse IP du terminal T₁, un port UDP source, et un port UDP destination. A l'aide de ces informations, il détermine la valeur du paramètre de gestion à appliquer aux paquets de données P₃. Une fois la valeur du paramètre de gestion à appliquer déterminée, l'équipement d'interface E remplace la valeur du paramètre de gestion compris en entête des paquets de données P₁, à savoir Param1, par la valeur du paramètre de gestion mémorisée lors de la configuration de l'équipement d'interface E, à savoir Param2.

L'équipement d'interface E transmet alors des paquets de données P₃' à l'équipement T₂. De tels paquets de données P₃' comportent en entête un paramètre de gestion dont la valeur est Param2. Ainsi, les paquets de données émis par le terminal T₁ héritent, lors de leur traitement par l'équipement d'interface E, du paramètre de gestion Param2 déterminé par le gestionnaire du réseau R2.

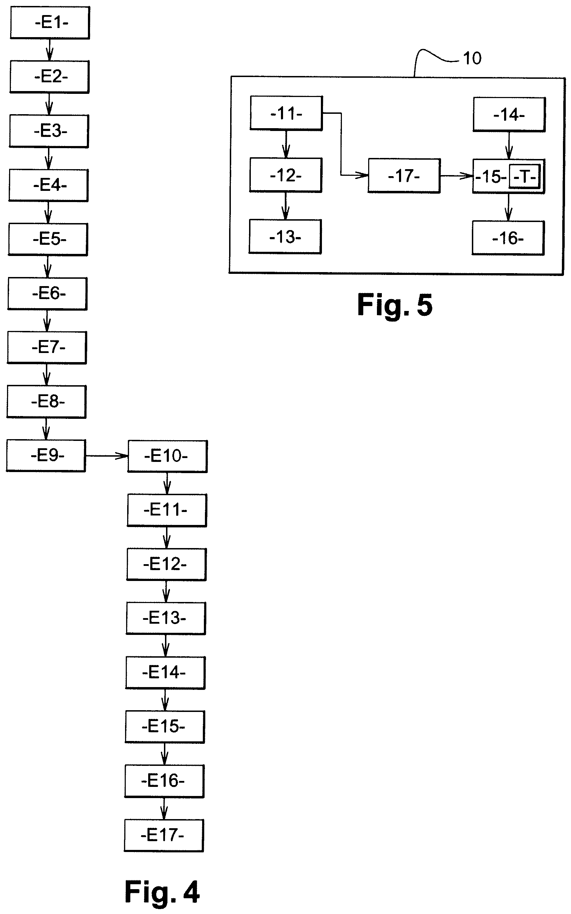

La figure 4 représente les différentes étapes du procédé de configuration objet de l'invention.

Au cours d'une étape E1, le terminal T₁ du réseau R1 émet un premier paquet de données P₁ appartenant à un flux de données S1. Le paquet de données P₁ comprend un paramètre de gestion Param1 de paquets de données destinés à être transmis dans le flux de données S1, ainsi qu'un paramètre ECN, dont la valeur est par exemple zéro.

Au cours d'une étape E2, le paquet de données P₁ est reçu par l'équipement d'interface E marquant la frontière entre le réseau R1 et le réseau R2.

L'équipement d'interface E remplace la valeur du paramètre de gestion Param1 compris dans le paquet de données P₁ par une valeur par défaut, ParamBE, au cours d'une étape E3.

L'équipement d'interface émet, au cours d'une étape E4, un paquet de données P₁' appartenant au flux de données S1 à destination de l'équipement T₂ appartenant au réseau R2. Un tel paquet de données P₁' diffère du paquet de données P₁ en ce que le paramètre de gestion compris dans ce paquet de données est ParamBE.

Au cours d'une étape E5, l'équipement T₂ reçoit le paquet de données P₁' et émet en réponse un deuxième paquet de données appartenant au flux de données S1 au cours d'une étape E6. Le paquet de données P₂ comprend un paramètre de gestion Param2 de paquets de données appartenant au flux de données S1 et un paramètre ECN, dont la valeur est à zéro.

Au cours d'une étape E7, le paquet de données P₂ est reçu par l'équipement d'interface E. L'équipement d'interface E mémorise la valeur du paramètre de gestion Param2 et du paramètre ECN comprises dans le paquet de données P₂ dans une table T. Des informations permettant d'identifier le flux de données S1 telles que l'adresse IP du terminal T₁, un port UDP source, et un port UDP destination sont également mémorisées dans cette table T.

L'équipement d'interface E remplace la valeur du paramètre de gestion Param2 compris dans le paquet de données P₂ par la valeur Param1 ou Param3 selon le mode de réalisation de l'invention mis en oeuvre, au cours d'une étape E8. L'équipement d'interface émet, au cours d'une étape E9, un paquet de données P₂' appartenant au flux de données S1 à destination du terminal T₁ appartenant au réseau R1. Un tel paquet de données P₂' diffère du paquet de données P₂ en ce que le paramètre de gestion compris dans ce paquet de données est Param1 ou Param3.

Au cours d'une étape E10, le terminal T₁ émet des paquets de données P₃ à destination de l'équipement T₂. Ceux-ci sont interceptés par l'équipement d'interface E.

Au cours d'une étape E11, l'équipement d'interface E identifie le flux de données auquel appartiennent les paquets de données P₃ afin de déterminer la valeur du paramètre de gestion à appliquer aux paquets de données P₃. Cette identification se fait au moyen des informations comprises dans la table T et d'informations comprises en entête des paquets de données P₃. Une fois la valeur du paramètre de gestion à appliquer déterminée, l'équipement d'interface E remplace la valeur du paramètre de gestion compris en entête des paquets de données P₃, à savoir Param1, par la valeur du paramètre de gestion mémorisée au cours de la configuration de l'équipement d'interface E, à savoir Param2, au cours d'une étape E12.

L'équipement d'interface E transmet alors des paquets de données P₃' à l'équipement T₂ au cours d'une étape E13.

Au cours d'une étape E14, l'équipement T₂ émet des paquets de données P₄ à destination du terminal T₁. Ceux-ci sont interceptés par l'équipement d'interface E.

Au cours d'une étape E15, l'équipement d'interface E identifie le flux de données auquel appartiennent les paquets de données P₄ afin de déterminer la valeur du paramètre de gestion à appliquer aux paquets de données P₄. Cette identification se fait au moyen des informations comprises dans la table T et d'informations comprises en entête des paquets de données P₄. Une fois la valeur du paramètre de gestion à appliquer déterminée, l'équipement d'interface E remplace la valeur du paramètre de gestion compris en entête des paquets de données P₄, à savoir Param2, par la valeur du paramètre de gestion mémorisée au cours de la configuration de l'équipement d'interface E, à savoir Param1 ou Param3, au cours d'une étape E16.

L'équipement d'interface E transmet alors des paquets de données P₄, P₄' vers le terminal T₁ au cours d'une étape E17.

Le procédé de configuration objet de l'invention permet également de prendre en compte de manière simple toute modification de la politique de gestion du réseau R2, telle qu'une modification de la valeur du paramètre de gestion à appliquer aux paquets de données appartenant au flux de données S1.

En effet, l'équipement d'interface E interceptant les paquets de données émis depuis l'équipement T₂ à destination du terminal T₁, il est possible de mettre à jour la table T en remplaçant l'ancienne valeur du paramètre de gestion mémorisée dans la table T, pour un flux de données particulier, par une nouvelle valeur à appliquer aux paquets de données transmis dans ce flux de données.

Les flux de données relatifs à certains services tels que la voix sur IP, un service de transfert de fichiers ou encore l'utilisation de téléphones convergents basée sur des technologies telles que l'IWLAN (*Interworking Wireless LAN*) l'UMA (*Unlicensed Mobile Access*) ou encore l'IPsec (*Internet Protocol Security*) nécessitent une transmission sécurisée. Afin d'assurer la sécurité de la transmission, les flux de données relatifs à ces services sont rendus compréhensibles uniquement par le destinataire final, ici le terminal T₁, par exemple par application d'un algorithme de chiffrement.

De tels flux de données sont transmis au travers d'un tunnel IPsec. La technologie IPsec repose sur un ensemble de protocoles utilisant des algorithmes permettant le transport de flux de données sécurisés sur un réseau IP. Un tunnel IPsec est établi au moyen de protocoles qui assurent l'intégrité et la confidentialité de la transmission. Un exemple d'un tel protocole est le protocole ESP (*Encapsulating Security Payload)* défini dans le document de l'IETF référencé RFC 2406.

Le terme tunnel IPsec est utilisé pour symboliser le fait que les données transmises entre un premier et un deuxième équipements réseau, c'est-à-dire par exemple entre l'équipement T₂ et le terminal T₁, constituant les extrémités d'un tunnel IPsec, sont chiffrées et donc normalement incompréhensibles pour tout équipement réseau situé entre les deux extrémités du tunnel IPsec, tel que l'équipement intermédiaire E.

Un tunnel IPsec, représenté par des tirets sur la figure 6, est établi entre le terminal T₁ du réseau R1 et l'équipement T₂ du réseau R2 au travers de l'équipement intermédiaire E. Un tel tunnel IPsec est identifié par exemple au moyen de l'adresse IP du terminal T₁, un port UDP appartenant à l'équipement T₂, dit port UDP source, et un port UDP appartenant au terminal T₁, dit port UDP destination. Du point de vue de l'équipement intermédiaire E, ce tunnel IPsec est perçu comme un flux de données, car les données permettant à l'équipement intermédiaire E de l'identifier sont de même nature que les données permettant d'identifier un flux de données classique, c'est-à-dire non transmis au travers d'un tunnel IPsec.

Dans un tel tunnel IPsec, une pluralité de flux de données chiffrés chacun relatif à un service particulier sont échangés entre le terminal T₁ et l'équipement T₂.

Les paquets de données appartenant à chaque flux de données échangés au travers du tunnel IPsec comprennent des paramètres de gestion tels que par exemple la classe de service DSCP, ainsi qu'un paramètre ECN. Les paquets de données relatifs aux différents flux de données chiffrés échangés au travers du tunnel IPsec sont encapsulés dans des paquets de données appartenant au tunnel IPsec. Les paquets de données appartenant au tunnel IPsec comprennent en entête une copie des paramètres de gestion et du paramètre ECN relatifs aux différents flux de données chiffrés.

Dans ce deuxième mode de réalisation de l'invention, le paramètre ECN présente un intérêt particulier. En effet, dans un tel mode de réalisation, la valeur du paramètre ECN permet de différencier les différents flux de données transmis au travers d'un même tunnel IPsec au niveau de l'équipement intermédiaire E.

Les paramètres de gestion de paquets de données sont propres à chaque type de service proposé ou demandé, et sont déterminés le plus souvent par le gestionnaire du réseau de communication. Les paramètres de gestion et le paramètre ECN sont compris respectivement dans les champs DSCP et ECN des champs d'entête des paquets de données.

Le réseau R1 étant un réseau local domestique, les différents terminaux fournissent des paramètres de gestion à appliquer aux paquets de données transitant dans le réseau à l'équipement d'interface E. L'équipement E s'assure que les flux de données bénéficient des ressources nécessaires à la fourniture du service correspondant.

De même, les paramètres de gestion à appliquer aux paquets de données transitant dans le réseau R2 sont déterminés par l'opérateur en télécommunications gestionnaire du réseau R2. Celui-ci s'assure que les flux de données bénéficient des ressources nécessaires à la fourniture du service correspondant.

Cependant, lorsque les différents flux de données sont transmis au travers d'un tunnel IPsec, du point de vue de l'équipement intermédiaire E tout se passe comme si un seul flux de données est échangé entre le terminal T₁ et l'équipement T₂, à savoir le tunnel IPsec. L'équipement intermédiaire est alors dans l'incapacité de traiter les différents flux de données échangés au travers du tunnel IPsec de manière individuelle.

Ainsi, si deux flux de données distincts sont échangés au travers du même tunnel IPsec, l'équipement intermédiaire E ne peut déterminer quels paramètres de gestion appliquer aux paquets de données reçus. De manière plus générale, ceci est vrai pour tout flux de données encapsulé dans un autre flux de données chiffré.

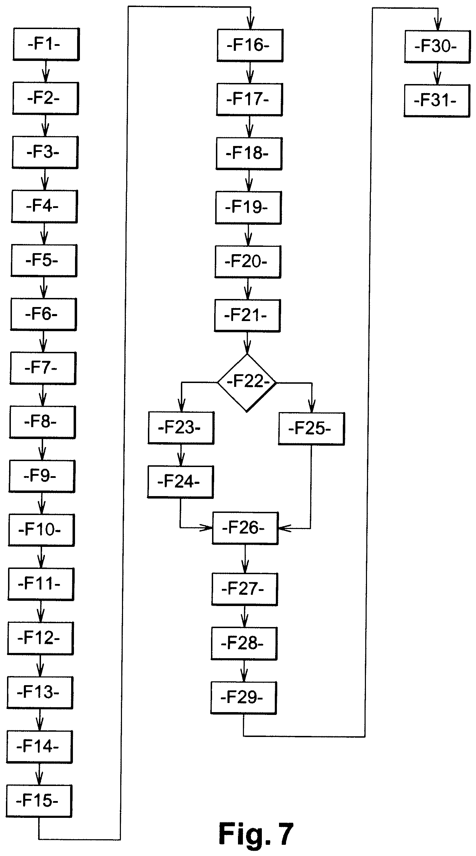

La figure 7 représente les différentes étapes du procédé de configuration dans le deuxième mode de réalisation de l'invention.

Lorsqu'un usager souhaite bénéficier d'un premier service sur le terminal T₁, nécessitant l'établissement d'un tunnel IPsec, ce dernier doit établir un flux de données G1 avec l'équipement T₂ du réseau R2 fournissant le service demandé.

Le terminal T₁ émet à destination de l'équipement d'interface E un premier paquet de données M₁ appartenant à un flux de données G1 chiffré, au cours d'une étape F1. Un tel paquet de données M₁ comprend un paramètre de gestion Param1 et un paramètre ECN, dont la valeur est à zéro, à appliquer à tous les paquets de données émis par le terminal T₁ à destination de l'équipement T₂ au travers du tunnel IPsec et appartenant au flux de données G1 chiffré. Ce paquet de données M₁ est encapsulé dans un paquet de données m₁ appartenant au tunnel IPsec et comprenant en entête le paramètre de gestion Param1 et le paramètre ECN.

A réception de ce paquet de données m₁, au cours d'une étape F2, l'équipement d'interface E peut, dans un mode de réalisation particulier de l'invention, remplacer la valeur du paramètre de gestion Param1 compris en entête des paquets de données émis par le terminal T₁ par un paramètre de gestion prédéterminé ParamBE. Dans ce mode de réalisation, la valeur du paramètre ECN reste inchangée et vaut toujours zéro. Dans un mode de réalisation particulier de l'invention, l'équipement d'interface E peut remplacer la valeur du paramètre ECN par une valeur par défaut.

L'équipement d'interface E émet alors, au cours d'une étape F3, un deuxième paquet de données m₁' appartenant au tunnel IPsec dans lequel le paramètre de gestion est ParamBE et non plus Param1. En remplaçant le paramètre de gestion compris dans le paquet de données m₁ par le paramètre de gestion ParamBE, on s'assure que les paquets de données M₁ émis par le terminal T₁, et encapsulés dans le paquet de données m₁, se voient appliquer par les équipements appartenant au réseau R2 une politique de traitement assurant une qualité de service satisfaisante.

A réception de ce paquet de données m₁', au cours d'une étape F4, l'équipement T₂ émet à destination du terminal T₁, au cours d'une étape F5, un troisième paquet de données M₂ appartenant au flux de données G1 chiffré. Un tel paquet de données M₂ comprend un paramètre de gestion Param2 et un paramètre ECN, dont la valeur est par exemple 1, à appliquer à tous les paquets de données émis par le terminal T₁ à destination de l'équipement T₂ au travers du tunnel IPsec et appartenant au flux de données G1 chiffré. Ce paquet de données M₂ est encapsulé dans un paquet de données m₂ appartenant au tunnel IPsec et comprenant en entête le paramètre de gestion Param2 et le paramètre ECN.

Le paquet de données m₂ est intercepté, au cours d'une étape F6, par l'équipement d'interface E qui extrait, au cours d'une étape F7, la valeur du paramètre de gestion Param2 et du paramètre ECN. Les valeurs de ces deux paramètres sont accessibles à l'équipement intermédiaire bien que celui-ci ne constitue pas une extrémité du tunnel IPsec. Les valeurs de ces deux paramètres sont mémorisées dans une table T avec d'autres informations comprises dans le paquet de données d'établissement m₂, telles que l'adresse IP du terminal T₁, le port UDP source, et le port UDP destination. Ainsi, les valeurs des paramètres Param2 et ECN sont mémorisées, au cours d'une étape F8, dans la table T avec des informations, qui du point de vue de l'équipement intermédiaire E, identifient le tunnel IPsec et non pas le flux de données G1 chiffré.

A réception de ce paquet de données m₂ l'équipement d'interface E peut, dans un mode de réalisation particulier de l'invention, remplacer la valeur du paramètre de gestion Param2 compris en entête des paquets de données de données émis par l'équipement T₂ par le paramètre de gestion Param1 utilisé dans le réseau R1. L'équipement d'interface E émet alors un deuxième paquet de données m₂' appartenant au tunnel IPsec dans lequel le paramètre de gestion est Param1 et non plus Param2. La valeur du paramètre ECN reste inchangée et vaut toujours 1. Dans un mode de réalisation particulier de l'invention, l'équipement d'interface E peut remplacer la valeur du paramètre ECN par une valeur par défaut.

Dans un autre mode de réalisation particulier de l'invention, la valeur du paramètre de gestion Param2 compris en entête des paquets de données émis par l'équipement T₂ peut être remplacée par une nouvelle valeur Param3 du paramètre de gestion. Une telle valeur Param3 du paramètre de gestion est mémorisée dans la table T de l'équipement d'interface E. Dans ce mode de réalisation la valeur du paramètre ECN reste inchangée et vaut 1.

Le paquet de données m₂, m₂' est ensuite transmis au terminal T₁, au cours d'une étape F9.

Une fois l'équipement d'interface E configuré, des paquets de données M₃ appartenant au flux de données G1 chiffré et encapsulé dans un paquet de données m₃ appartenant au tunnel IPsec et comprenant en entête le paramètre de gestion Param2 et le paramètre ECN sont émis, au cours d'une étape F10,par le terminal T₁. Les paquets de données m₃ sont interceptés, au cours d'une étape F11, par l'équipement d'interface E.

L'équipement d'interface E identifie, au cours d'une étape F12, le tunnel IPsec au travers duquel les paquets de données m₃ sont transmis au moyen des informations d'identification comprises dans la table T. A l'aide de ces informations, il détermine, au cours d'une étape F13, la valeur du paramètre de gestion à appliquer aux paquets de données m₃. Une fois la valeur du paramètre de gestion à appliquer déterminée, l'équipement d'interface E remplace, au cours d'une étape F14, la valeur du paramètre de gestion compris en entête des paquets de données m₃, à savoir Param1, par la valeur du paramètre de gestion mémorisée lors de la configuration de l'équipement d'interface E, à savoir Param2.

L'équipement d'interface E transmet alors, au cours d'une étape F15, des paquets de données m₃' à l'équipement T₂. De tels paquets de données m₃' comportent en entête un paramètre de gestion dont la valeur est Param2. Ainsi, les paquets de données émis par le terminal T₁ héritent, lors de leur traitement par l'équipement d'interface E, du paramètre de gestion Param2 déterminé par le gestionnaire du réseau R2.

Lorsqu'un usager souhaite bénéficier d'un deuxième service sur le terminal T₁, nécessitant d'être transmis au travers du même tunnel IPsec, ce dernier doit établir un flux de données G2 chiffré avec l'équipement T₂ du réseau R2 fournissant le service demandé.

Le terminal T₁ émet alors, au cours d'une étape F16, à destination de l'équipement d'interface E un premier paquet de données N₁ appartenant au flux de données G2 chiffré. Un tel paquet de données N₁ comprend un paramètre de gestion Param10 et un paramètre ECN, dont la valeur est à zéro, à appliquer à tous les paquets de données émis par le terminal T₁ à destination de l'équipement T₂ au travers du tunnel IPsec et appartenant au flux de données G2. Ce paquet de données N₁ est encapsulé dans un paquet de données n₁ appartenant au tunnel IPsec et comprenant en entête le paramètre de gestion Param10 et le paramètre ECN.

A réception de ce paquet de données n₁, au cours d'une étape F17, l'équipement d'interface E peut, dans un mode de réalisation particulier de l'invention, remplacer la valeur du paramètre de gestion Param10 compris en entête des paquets de données n₁ émis par le terminal T₁ par un paramètre de gestion prédéterminé ParamBE. Dans ce mode de réalisation, la valeur du paramètre ECN reste inchangée et vaut toujours zéro.

L'équipement d'interface E émet alors, au cours d'une étape F18, un deuxième paquet de données n₁' appartenant au tunnel IPsec dans lequel le paramètre de gestion est ParamBE et non plus Param10.

A réception de ce paquet de données n₁', au cours d'une étape F19, l'équipement T₂ émet, au cours d'une étape F20, à destination du terminal T₁, un troisième paquet de données N₂ appartenant au flux de données G2 chiffré. Un tel paquet de données N₂ comprend un paramètre de gestion Param20 et un paramètre ECN, dont la valeur est par exemple 2, à appliquer à tous les paquets de données émis par le terminal T₁ à destination de l'équipement T₂ au travers du tunnel IPsec et appartenant au flux de données G2. Ce paquet de données N₂ est encapsulé dans un paquet de données n₂ appartenant au tunnel IPsec et comprenant en entête le paramètre de gestion Param20 et le paramètre ECN.

La valeur du paramètre ECN des paquets de données appartenant au tunnel IPsec et associée au flux de données G2 est différente de la valeur du paramètre ECN des paquet de données appartenant au tunnel IPsec associée au flux de données G1 car elle permet de différencier les deux flux de données transmis au travers d'un même tunnel IPsec au niveau de l'équipement intermédiaire E.

A réception de ce paquet de données n₂ l'équipement d'interface E identifie, au cours d'une étape F21,le tunnel IPsec au travers duquel le paquet de données n₂ est transmis au moyen des informations d'identification déjà comprises dans la table T à savoir l'adresse IP du terminal T₁, le port UDP source, et le port UDP destination. Si l'équipement intermédiaire E identifie le tunnel IPsec dans sa table T, il compare alors, au cours d'une étape F22, la valeur du paramètre ECN mémorisée dans la table T à la valeur du paramètre ECN comprise dans le paquet de données n₂.

Si les deux valeurs du paramètre ECN sont identiques cela signifie qu'il faut mettre à jour la table T. L'équipement intermédiaire E supprime de la table T, au cours d'une étape F23, la valeur du paramètre de gestion et la valeur du paramètre ECN mémorisées dans la table T et les remplace par la valeur du paramètre de gestion et la valeur du paramètre ECN comprises dans le paquet de données n_{2,,} au cours d'une étape F24. L'ensemble d'informations [adresse IP du terminal T₁, port UDP source, port UDP destination, paramètre ECN et paramètre de gestion] ainsi mémorisé correspond à un flux de données particulier et donc à un service particulier pour lequel les paramètres de gestion ont été modifiés.

Si les deux valeurs du paramètre ECN sont distinctes, cela signifie qu'il faut créer, au cours d'une étape F25, une nouvelle entrée dans la table T car le paquet de données reçu concerne un flux de données différent, et donc un service différent, de celui pour lequel une entrée a déjà été créée dans la table T. La table T comprend alors deux entrées distinctes : une première entrée correspondant à un premier flux de données G1 chiffré transmis au travers du tunnel IPsec identifié par un premier ensemble d'informations comprenant l'adresse IP du terminal T₁, le port UDP source, le port UDP destination, un premier paramètre ECN dont la valeur est par exemple 1 et un premier paramètre de gestion dont la valeur est Param2 ; et une deuxième entrée correspondant à un deuxième flux de données G2 chiffré également transmis au travers du tunnel IPsec identifié par un deuxième ensemble d'informations comprenant l'adresse IP du terminal T₁, le port UDP source, le port UDP destination, un deuxième paramètre ECN dont la valeur est par exemple 2 et un deuxième paramètre de gestion dont la valeur est Param20.

A réception de ce paquet de données n₂ l'équipement d'interface E peut, dans un mode de réalisation particulier de l'invention, remplacer la valeur du paramètre de gestion Param20 compris en entête des paquets de données émis par l'équipement T₂ par le paramètre de gestion Param10 utilisé dans le réseau R1. L'équipement d'interface E émet alors un deuxième paquet de données n₂' appartenant au flux de données G1 chiffré dans lequel le paramètre de gestion est Param10 et non plus Param20. La valeur du paramètre ECN reste inchangée et vaut toujours 2. Dans un mode de réalisation particulier de l'invention, l'équipement d'interface E peut remplacer la valeur du paramètre ECN par une valeur par défaut.

Dans un autre mode de réalisation particulier de l'invention, la valeur du paramètre de gestion Param20 compris en entête des paquets de données émis par l'équipement T₂ peut être remplacée par une nouvelle valeur Param30 du paramètre de gestion. Une telle valeur Param30 du paramètre de gestion est mémorisée dans la table T de l'équipement d'interface E. Dans ce mode de réalisation la valeur du paramètre ECN reste inchangée et vaut 2.

Le paquet de données n₂, n'₂ est ensuite transmis au terminal T₁, au cours d'une étape F26.

Une fois l'équipement d'interface E configuré, des paquets de données N₃ appartenant au flux de données G2 chiffré, encapsulés dans un paquet de données n₃ appartenant au tunnel IPsec et comprenant en entête le paramètre de gestion Param20 et le paramètre ECN sont émis, au cours d'une étape F27, par le terminal T₁. Les paquets de données n₃ sont interceptés par l'équipement d'interface E.

L'équipement d'interface E identifie, au cours d'une étape F28, le tunnel IPsec au travers duquel les paquets de données n₃ sont transmis ainsi que le flux de service chiffré G1, G2 auquel ils appartiennent au moyen des informations d'identification comprises dans la table T et notamment la valeur du paramètre ECN comprise le champ ECN des champs d'entête des paquets de données relatifs à chaque flux de données. La valeur du paramètre ECN est fiable bien que le flux de données soit émis par le terminal T₁ car le flux est émis au travers d'un tunnel IPsec et est donc conforme à des règles propres à la technologie IPsec.

A l'aide de ces informations, il détermine, au cours d'une étape F29, le flux de données auquel le paquet de données intercepté appartient et par conséquent la valeur du paramètre de gestion à appliquer aux paquets de données n₃ à savoir Param2 ou Param20. Une fois la valeur du paramètre de gestion à appliquer déterminée, l'équipement d'interface E remplace, au cours d'une étape F30, la valeur du paramètre de gestion compris en entête des paquets de données n₃, par la valeur du paramètre de gestion mémorisée lors de la configuration de l'équipement d'interface E.

L'équipement d'interface E transmet alors, au cours d'une étape F31, des paquets de données n₃' à l'équipement T₂. De tels paquets de données n₃' comportent en entête un paramètre de gestion dont la valeur est Param2 ou Param20. Ainsi, les paquets de données émis par le terminal T₁ héritent, lors de leur traitement par l'équipement d'interface E, du paramètre de gestion Param2 ou Param20 déterminé par le gestionnaire du réseau R2 bien qu'ils soient transmis au travers d'un tunnel IPsec.

Un dispositif apte à mettre en oeuvre le procédé objet de l'invention est représenté à la figure 5. Un tel dispositif 10 est disposé à l'interface entre un premier réseau R1 et un deuxième réseau R2.

Le dispositif 10 comprend des moyens 11 de réception de paquets de données appartenant à un flux de données en provenance du réseau R1.

De tels moyens de réception 11 sont connectés en entrée de moyens de remplacement 12 de la valeur du paramètre de gestion à appliquer aux paquets de données émis par le terminal T₁ appartenant au réseau R1 par une valeur prédéterminée.

De tels moyens de remplacement 12 sont connectés en entrée de moyens d'émission 13, à destination du réseau R2, de paquets de données appartenant au flux de données.

Le dispositif 10 comprend également des moyens 14 de réception de paquets de données appartenant au flux de données et en provenance du réseau R2. Ces moyens de mémorisation 15 peuvent comprendre une table T dans laquelle le paramètre de gestion est mémorisé.

De tels moyens de réception 14 sont connectés en entrée de moyens de mémorisation 15 de la valeur du paramètre de gestion à appliquer aux paquets de données appartenant à un flux de données S1 échangé entre le terminal T₁ et l'équipement T₂ appartenant au réseau R2.

De tels moyens de mémorisation 15 sont connectés en entrée de moyens d'émission 16 de paquets de données à destination du réseau R1.

Le dispositif 10 comporte enfin des moyens d'identification 17 du flux de données auquel appartiennent des paquets de données. De tels moyens d'identification 17 sont connectés en sortie des moyens de réception 11 et en entrée des moyens d'émission 16. Ces moyens d'identification 17 permettent de déterminer la valeur du paramètre de gestion à appliquer aux paquets de données en cours de traitement.

Un dispositif 10 objet de l'invention peut être disposé dans un équipement réalisant une interface entre deux réseaux de communication distincts tel qu'une passerelle résidentielle ou d'entreprise, un multiplexeur de lignes numériques d'abonnés ou DSLAM, en un routeur, en une terminaison optique de ligne ou OLT, ou encore un noeud d'accès multiservice ou MSAN.

Enfin, l'invention a aussi pour objet un programme d'ordinateur, notamment un programme d'ordinateur sur ou dans un support d'informations ou mémoire, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé de configuration selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

## Revendications

1. Procédé de configuration de paramètres de gestion d'un flux de données mis en oeuvre par un équipement (E) de communication réalisant une interface entre un premier (R1) et un deuxième réseau (R2) de communication, le procédé comprenant :
- une première étape de réception (E2, F2, F17) d'un premier paquet (P1) du flux de données depuis le premier réseau de communication à destination du deuxième réseau de communication, ledit paquet comprenant en entête une première valeur d'un paramètre de gestion du flux de données,
- une deuxième étape de réception (E7, F6, F21) d'un deuxième paquet (P2) du flux de données depuis le deuxième réseau à destination du premier réseau, ledit paquet comprenant en entête une deuxième valeur du paramètre de gestion du flux de données,
**caractérisé en ce que** le procédé comprend en outre :
- une étape (E7, F8, F25) de mémorisation, dans une table, d'informations d'identification du flux et d'au moins la deuxième valeur du paramètre de gestion du flux de données, cette valeur étant destinée à être appliquée par l'équipement (E) de communication à l'ensemble des paquets appartenant au flux de données à destination du deuxième réseau de communication.

2. Procédé de configuration selon la revendication 1, dans lequel, préalablement à l'étape de mémorisation de la valeur du paramètre de gestion à appliquer, une valeur prédéterminée est appliquée aux paquets de données appartenant au flux de données à destination du deuxième réseau.

3. Procédé de configuration selon la revendication 1, **caractérisé en ce que** l'étape (F7, F25) de mémorisation comprend en outre la mémorisation de la valeur d'un paramètre, dit paramètre ECN, compris dans l'entête du deuxième paquet, cette valeur étant destinée à différencier différents flux partageant des mêmes informations d'identification de flux.

4. Procédé de configuration selon la revendication 1, dans lequel la valeur du paramètre de gestion mémorisée dans la table est remplacée par une nouvelle valeur comprise en entête dans un paquet (P4) intercepté du flux de données depuis le deuxième réseau à destination du premier réseau.

5. Procédé de traitement de paquets de données appartenant à un flux de données, mis en oeuvre par un équipement (E) de communication réalisant une interface entre un premier (R1) et un deuxième réseau (R2) de communication, le procédé comprenant :
- une étape (E10, F11, F27) d'interception d'un paquet (P3) du flux de données depuis le premier réseau de communication à destination du deuxième réseau de communication, ledit paquet comprenant en entête une première valeur d'un paramètre de gestion du flux de données,
**caractérisé en ce que,** l'équipement (E) de communication ayant été configuré selon le procédé de configuration de la revendication 1, et comprenant la table selon la revendication 1, le procédé comprend en outre :
- une étape (E11, F12, F28, F29) d'identification du flux de données au moyen d'informations d'identification du flux comprises dans la table et dans l'entête du paquet,
- une étape (E11, F13, F29) de détermination de la deuxième valeur du paramètre de gestion du flux de données à appliquer, qui est mémorisée dans la table pour le flux identifié,
- une étape (E12, F14, F30) de remplacement de la première valeur du paramètre de gestion du flux de données par la valeur déterminée,
- une étape (E13, F15, F31) de transmission du paquet (P'3) de données à destination du deuxième réseau.

6. Procédé de traitement selon la revendication 5, **caractérisé en ce que** l'étape (F28, F29) d'identification du flux de données prend en compte une valeur d'un paramètre, dit paramètre ECN.

7. Dispositif de configuration de paramètres de gestion d'un flux de données, le dispositif étant adapté pour être mis en oeuvre dans un équipement (E) de communication réalisant une interface entre un premier (R1) et un deuxième réseau (R2) de communication, le dispositif comprenant :
- des premiers moyens de réception d'un premier paquet (P1) du flux de données depuis le premier réseau de communication à destination du deuxième réseau de communication, ledit paquet comprenant en entête une première valeur d'un paramètre de gestion du flux de données,
- des deuxièmes moyens de réception d'un deuxième paquet (P2) du flux de données depuis le deuxième réseau à destination du premier réseau, ledit paquet comprenant en entête une deuxième valeur du paramètre de gestion du flux de données,
**caractérisé en ce que** le dispositif comprend en outre :
- des moyens de mémorisation, dans une table, pour le flux de données, d'informations d'identification du flux et d'au moins la deuxième valeur du paramètre de gestion du flux de donnée, cette valeur étant destinée à être appliquée par l'équipement (E) de communication à l'ensemble des paquets appartenant au flux de données à destination du deuxième réseau de communication.

8. Dispositif de traitement de paquets de données comprenant le dispositif de configuration de paramètres de gestion d'un flux de données selon la revendication 7, le dispositif comprenant :
- des moyens d'interception d'un paquet (P3) du flux de données depuis le premier réseau de communication à destination du deuxième réseau de communication, ledit paquet comprenant en entête la première valeur d'un paramètre de gestion du flux de données, le dispositif comprenant en outre :
- des moyens d'identification du flux de données au moyen d'informations d'identification du flux comprises dans la table et dans l'entête du paquet,
- des moyens de détermination de la deuxième valeur du paramètre de gestion du flux de donées à appliquer, qui est mémorisée dans la table pour le flux identifié,
- des moyens de remplacement dans le paquet de la première valeur du paramètre de gestion du flux de données par la valeur déterminée, et
- des moyens de transmission du paquet (P'3) de données à destination du deuxième réseau.

9. Equipement réalisant une interface entre un premier et un deuxième réseau de télécommunication,
**caractérisé en ce qu'**il comprend un dispositif de configuration de paramètres de gestion selon la revendication 7 et un dispositif de traitement de paquets de données selon la revendication 8.

10. Programme d'ordinateur, **caractérisé en ce qu'**il comprend des instructions de code de programme pour la mise en oeuvre des étapes d'un procédé selon les revendications 1 à 6 lorsque le programme est exécuté par un processeur.

11. Support d'enregistrement lisible par un dispositif de configuration sur lequel est enregistré le programme selon la revendication 10.

## Patentansprüche

1. Verfahren zum Konfigurieren von Parametern zur Verwaltung eines Datenflusses, das von einer Kommunikationsausrüstung (E) eingesetzt wird, die eine Schnittstelle zwischen einem ersten (R1) und einem zweiten (R2) Kommunikationsnetz herstellt, wobei das Verfahren Folgendes umfasst:
- einen ersten Schritt (E2, F2, F17) des Empfangs eines ersten Pakets (P1) des Datenflusses von dem ersten Kommunikationsnetz in Richtung des zweiten Kommunikationsnetzes, wobei das Paket am Kopf einen ersten Wert eines Parameters zur Verwaltung des Datenflusses umfasst,
- einen zweiten Schritt (E7, F6, F21) des Empfangs eines zweiten Pakets (P2) des Datenflusses von dem zweiten Netz in Richtung des ersten Netzes, wobei das Paket am Kopf einen zweiten Wert des Parameters zur Verwaltung des Datenflusses umfasst,
**dadurch gekennzeichnet, dass** das Verfahren ferner Folgendes umfasst:
- einen Schritt (E7, F8, F25) der Speicherung von Informationen zur Identifizierung des Flusses und mindestens des zweiten Werts des Parameters zur Verwaltung des Datenflusses in einer Tabelle, wobei dieser Wert dazu bestimmt ist, von der Kommunikationsausrüstung (E) an der Gesamtheit der Pakete, die dem Datenfluss in Richtung des zweiten Kommunikationsnetzes angehören, angewandt zu werden.

2. Verfahren zum Konfigurieren nach Anspruch 1, bei dem vor dem Schritt der Speicherung des Werts des anzuwendenden Verwaltungsparameters ein vorbestimmter Wert an den Datenpaketen, die dem Datenfluss in Richtung des zweiten Netzes angehören, angewandt wird.

3. Verfahren zum Konfigurieren nach Anspruch 1, **dadurch gekennzeichnet, dass** der Schritt (F7, F25) der Speicherung ferner die Speicherung des Werts eines Parameters, ECN-Parameter genannt, der am Kopf des zweiten Pakets enthalten ist, umfasst, wobei dieser Wert dazu bestimmt ist, verschiedene Flüsse, die gleiche Informationen zum Identifizieren eines Flusses teilen, zu differenzieren.

4. Verfahren zum Konfigurieren nach Anspruch 1, bei dem der Wert des Verwaltungsparameters, der in der Tabelle gespeichert ist, durch einen neuen Wert ersetzt wird, der am Kopf in einem Paket (P4), das von dem Datenfluss vom zweiten Netz in Richtung des ersten Netzes abgefangen wird, enthalten ist.

5. Verfahren zum Verarbeiten von Datenpaketen, die einem Datenfluss angehören, das von einer Kommunikationsausrüstung (E) eingesetzt wird, die eine Schnittstelle zwischen einem ersten (R1) und einem zweiten (R2) Kommunikationsnetz herstellt, wobei das Verfahren Folgendes umfasst:
- einen Schritt (E10, F11, F27) des Abfangens eines Pakets (P3) des Datenflusses von dem ersten Kommunikationsnetz in Richtung des zweiten Kommunikationsnetzes, wobei das Paket am Kopf einen ersten Wert eines Parameters zur Verwaltung des Datenflusses umfasst,
**dadurch gekennzeichnet, dass**, wobei die Kommunikationsausrüstung (E) nach dem Verfahren zum Konfigurieren nach Anspruch 1 konfiguriert wurde und die Tabelle nach Anspruch 1 umfasst, das Verfahren ferner umfasst:
- einen Schritt (E11, F12, F28, F29) des Identifizierens des Datenflusses mit Hilfe von Informationen zum Identifizieren des Flusses, die in der Tabelle und am Kopf des Pakets enthalten sind,
- einen Schritt (E11, F13, F29) des Bestimmens des zweiten Werts des Parameters zur Verwaltung des anzuwendenden Datenflusses, der in der Tabelle für den identifizierten Fluss gespeichert wird,
- einen Schritt (E12, F14, F30) des Ersetzens des ersten Werts des Parameters zur Verwaltung des Datenflusses durch den bestimmten Wert,
- einen Schritt (E13, F15, F31) der Übertragung des Datenpakets (P'3) in Richtung des zweiten Netzes.

6. Verfahren zum Verarbeiten nach Anspruch 5, **dadurch gekennzeichnet, dass** der Schritt (F28, F29) zum Identifizieren des Datenflusses einen Wert eines Parameters, ECN-Parameter genannt, berücksichtigt.

7. Vorrichtung zum Konfigurieren von Parametern zur Verwaltung eines Datenflusses, wobei die Vorrichtung geeignet ist, in einer Kommunikationsausrüstung (E) eingesetzt zu werden, die eine Schnittstelle zwischen einem ersten (R1) und einem zweiten (R2) Kommunikationsnetz herstellt, wobei die Vorrichtung Folgendes umfasst:
- erste Mittel zum Empfang eines ersten Pakets (P1) des Datenflusses von dem ersten Kommunikationsnetz in Richtung des zweiten Kommunikationsnetzes, wobei das Paket am Kopf einen ersten Wert eines Parameters zur Verwaltung des Datenflusses umfasst,
- zweite Mittel zum Empfang eines zweiten Pakets (P2) des Datenflusses von dem zweiten Netz in Richtung des ersten Netzes, wobei das Paket am Kopf einen zweiten Wert des Parameters zur Verwaltung des Datenflusses umfasst,
**dadurch gekennzeichnet, dass** die Vorrichtung ferner Folgendes umfasst:
- Mittel zur Speicherung von Informationen zur Identifizierung des Flusses und mindestens des zweiten Werts des Parameters zur Verwaltung des Datenflusses in einer Tabelle für den Datenfluss, wobei dieser Wert dazu bestimmt ist, von der Kommunikationsausrüstung (E) an der Gesamtheit der Pakete, die dem Datenfluss in Richtung des zweiten Kommunikationsnetzes angehören, angewandt zu werden.

8. Vorrichtung zum Verarbeiten von Datenpaketen, umfassend die Vorrichtung zum Konfigurieren von Parametern zur Verwaltung eines Datenflusses nach Anspruch 7, wobei die Vorrichtung Folgendes umfasst:
- Mittel zum Abfangen eines Pakets (P3) des Datenflusses von dem ersten Kommunikationsnetz in Richtung des zweiten Kommunikationsnetzes, wobei das Paket am Kopf den ersten Wert eines Parameters zur Verwaltung des Datenflusses umfasst,
wobei die Vorrichtung ferner Folgendes umfasst:
- Mittel zum Identifizieren des Datenflusses mit Hilfe von Informationen zum Identifizieren des Flusses, die in der Tabelle und am Kopf des Pakets enthalten sind,
- Mittel zum Bestimmen des zweiten Werts des Parameters zur Verwaltung des anzuwendenden Datenflusses, der in der Tabelle für den identifizierten Fluss gespeichert wird,
- Mittel zum Ersetzen des ersten Werts des Parameters zur Verwaltung des Datenflusses durch den bestimmten Wert in dem Paket,
- Mittel zur Übertragung des Datenpakets (P'3) in Richtung des zweiten Netzes.

9. Ausrüstung, die eine Schnittstelle zwischen einem ersten und einem zweiten Telekommunikationsnetz herstellt,
**dadurch gekennzeichnet, dass** sie eine Vorrichtung zum Konfigurieren von Verwaltungsparametern nach Anspruch 7 und eine Vorrichtung zum Bearbeiten von Datenpaketen nach Anspruch 8 umfasst.

10. Computerprogramm, **dadurch gekennzeichnet, dass** es Programmcodebefehle für den Einsatz der Schritte eines Verfahrens nach den Ansprüchen 1 bis 6, wenn das Programm von einem Prozessor ausgeführt wird, umfasst.

11. Aufzeichnungsträger, der von einer Vorrichtung zum Konfigurieren lesbar ist, auf dem das Programm nach Anspruch 10 gespeichert ist.

## Claims

1. Method for configuring parameters for managing a data flow, implemented by a communication device (E) forming an interface between a first (R1) and a second (R2) communication network, the method comprising:
- a first step (E2, F2, F17) of receiving a first packet (P1) of the data flow from the first communication network destined for the second communication network, said packet comprising, in the header, a first value of a parameter for managing the data flow,
- a second step (E7, F6, F21) of receiving a second packet (P2) of the data flow from the second network destined for the first network, said packet comprising, in the header, a second value of the parameter for managing the data flow,
**characterized in that** the method furthermore comprises:
- a step (E7, F8, F25) of storing, in a table, flow identification information and at least the second value of the parameter for managing the data flow,
this value being intended to be applied, by the communication device (E), to all of the packets belonging to the data flow destined for the second communication network.

2. Configuration method according to Claim 1, wherein, prior to the step of storing the value of the management parameter to be applied, a predetermined value is applied to the data packets belonging to the data flow destined for the second network.

3. Configuration method according to Claim 1, **characterized in that** the storage step (F7, F25) furthermore comprises storing the value of a parameter, termed ECN parameter, contained in the header of the second packet, this value being intended to differentiate various flows sharing the same flow identification information.

4. Configuration method according to Claim 1, wherein the value, stored in the table, of the management parameter is replaced with a new value contained in the header in an intercepted packet (P4) of the data flow from the second network destined for the first network.

5. Method for processing data packets belonging to a data flow, implemented by a communication device (E) forming an interface between a first (R1) and a second (R2) communication network, the method comprising:
- a step (E10, F11, F27) of intercepting a packet (P3) of the data flow from the first communication network destined for the second communication network, said packet comprising, in the header, a first value of a parameter for managing the data flow,
**characterized in that,** the communication device (E) having been configured in accordance with the configuration method of Claim 1, and comprising the table according to Claim 1, the method furthermore comprises:
- a step (E11, F12, F28, F29) of identifying the data flow by way of flow identification information contained in the table and in the header of the packet,
- a step (E11, F13, F29) of determining the second value of the parameter for managing the data flow to be applied, which value is stored in the table for the identified flow,
- a step (E12, F14, F30) of replacing the first value of the parameter for managing the data flow with the determined value,
- a step (E13, F15, F31) of transmitting the data packet (P'3) to the second network.

6. Processing method according to Claim 5, **characterized in that** the step (F28, F29) of identifying the data flow takes account of a value of a parameter, termed ECN parameter.

7. Apparatus for configuring parameters for managing a data flow, the apparatus being designed to be implemented in a communication device (E) forming an interface between a first (R1) and a second (R2) communication network, the apparatus comprising:
- first means for receiving a first packet (P1) of the data flow from the first communication network destined for the second communication network, said packet comprising, in the header, a first value of a parameter for managing the data flow,
- second means for receiving a second packet (P2) of the data flow from the second network destined for the first network, said packet comprising, in the header, a second value of the parameter for managing the data flow,
**characterized in that** the apparatus furthermore comprises:
- means for storing, in a table, for the data flow, flow identification information and at least the second value of the parameter for managing the data flow, this value being intended to be applied, by the communication device (E), to all of the packets belonging to the data flow destined for the second communication network.

8. Apparatus for processing data packets, comprising the apparatus for configuring parameters for managing a data flow according to Claim 7, the apparatus comprising:
- means for intercepting a packet (P3) of the data flow from the first communication network destined for the second communication network, said packet comprising, in the header, the first value of a parameter for managing the data flow,
the apparatus furthermore comprising:
- means for identifying the data flow by way of flow identification information contained in the table and in the header of the packet,
- means for determining the second value of the parameter for managing the data flow to be applied, which value is stored in the table for the identified flow,
- means for replacing, in the packet, the first value of the parameter for managing the data flow with the determined value, and
- means for transmitting the data packet (P'3) to the second network.

9. Device forming an interface between a first and a second telecommunication network,
**characterized in that** it comprises an apparatus for configuring management parameters according to Claim 7 and an apparatus for processing data packets according to Claim 8.

10. Computer program, **characterized in that** it comprises program code instructions for implementing the steps of a method according to Claims 1 to 6 when the program is executed by a processor.

11. Recording medium able to be read by a configuration apparatus and on which the program according to Claim 10 is recorded.
